## Europäisches Patentamt

## European Patent Office

## Office européen des brevets

(19)

(11) Publication number: **0 264 971 B1**

# EUROPEAN PATENT SPECIFICATION

(12)

(45) Date of publication of patent specification: **27.03.91**

(51) Int. Cl.⁵: **H02H 7/09**

(21) Application number: **87117882.8**

(22) Date of filing: **27.06.84**

(60) Publication number of the earlier application in accordance with Art.76 EPC: **0 130 547**

(54) **Voltage protective apparatus for variable-frequency power system.**

(30) Priority: **30.06.83 JP 120810/83**
**30.06.83 JP 120811/83**

(43) Date of publication of application:
**27.04.88 Bulletin 88/17**

(45) Publication of the grant of the patent:
**27.03.91 Bulletin 91/13**

(84) Designated Contracting States:
**CH DE GB LI**

(56) References cited:
**FR-A- 2 455 285**
**US-A- 3 546 534**

**SIEMENS REVIEW, vol. 43, no. 6, 1976, pages 257-259; A. FISCHER: "Overfluxing protection for transformers"**

(73) Proprietor: **MITSUBISHI DENKI KABUSHIKI KAISHA**
**2-3, Marunouchi 2-chome Chiyoda-ku Tokyo 100(JP)**

(72) Inventor: **Takata, Nobuharu c/o MITSUBISHI**

**DENKI K. K.**
**Power and Ind. Syst. Cen. 1-2, Wadasakicho 1-ch.**
**Hyogo-ku Kobe-shi Hyogo(JP)**
Inventor: **Hino, Sakio c/o MITSUBISHI DENKI K. K.**
**Power and Ind. Syst. Cen. 1-2, Wadasakicho 1-ch.**
**Hyogo-ku Kobe-shi Hyogo(JP)**
Inventor: **Ito, Makoto c/o MITSUBISHI DENKI K. K.**
**Power and Ind. Syst. Cen. 1-2, Wadasakicho 1-ch.**
**Hyogo-ku Kobe-shi Hyogo(JP)**
Inventor: **Kaneko,Seiji c/o MITSUBISHI DENKI K.K.**
**Power and Ind. Syst. Cen. 1-2, Wadasakicho 1-ch.**
**Hyogo-ku Kobe-shi Hyogo(JP)**

(74) Representative: **Eisenführ, Speiser & Strasse**
**Martinistrasse 24**
**W-2800 Bremen 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 264 971 B1

## Description

The present invention relates to a voltage protective apparatus for a variable-frequency electric power system.

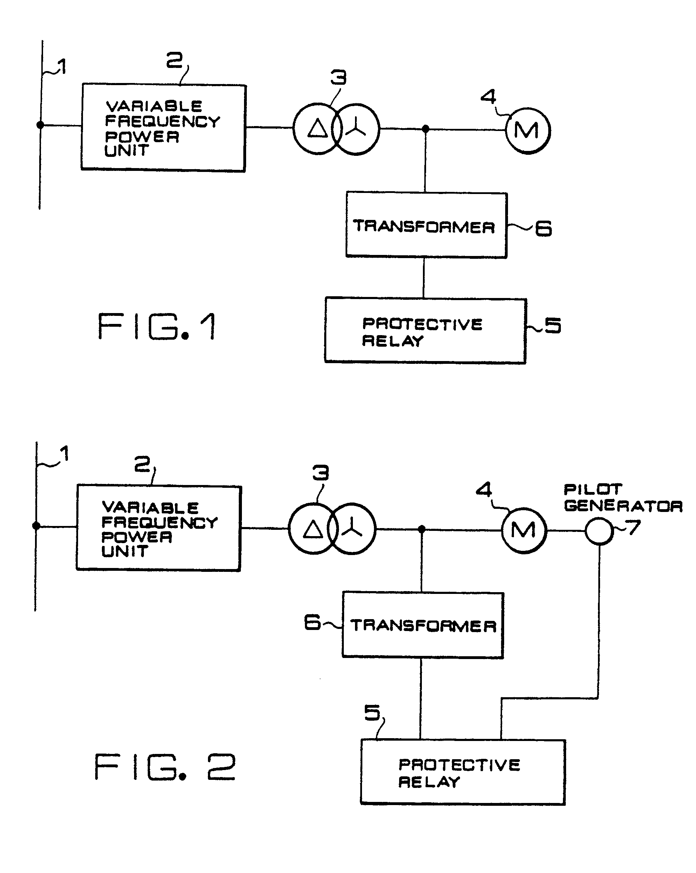

Fig. 1 is a block diagram of a conventional voltage protective apparatus, wherein there are shown an AC power supply line 1, a variable-frequency power unit 2, an output transformer 3, and an AC motor 4 which is a load in the power system. The secondary voltage of the output transformer 3 is detected and inputted to a protective relay (low-voltage or overvoltage relay) serving as a voltage detector. Also shown is an instrument transformer 6 for converting the secondary voltage of the output transformer 3 to a value suited for the protective relay 5.

The AC motor 4 receives via the output transformer 3 electric power from the AC power supply line 1 with its frequency controlled by the variable-frequency power unit 1, so that the AC motor 4 is rotated at a speed corresponding to the system frequency f inputted thereto. In order to prevent overheating of the AC motor 4 that may be induced by overexcitation during a low-frequency operation, the output of the variable-frequency power unit 2 is so controlled that the following relationship is maintained between the system voltage E and the system frequency f.

$$E = f \times Vs/fs \qquad \ldots\ldots (1)$$

where

fs: commercial frequency

Vs: normal operation voltage at commercial frequency.

In detection of the interphase (or phase) voltage relative to the AC motor 4, first the interphase (or phase) voltage Vm obtained at the secondary winding of the instrument transformer 6 and expressed by Eq. (2) shown below is introduced to the protective relay 5 and, in case the voltage Vm is greater than a threshold value of the protective relay 5, a detection signal is outputted to indicate an abnormal voltage representing a fault in the power system.

$$Vm = f \cdot (Vs/fs) \cdot Ko \qquad \ldots\ldots (2)$$

where Ko: constant.

However, since the detection voltage Vm is affected as well as the system voltage E by the system frequency f, if any overvoltage (or low voltage) is generated in a low-frequency driving mode of the AC motor 4, the voltage detection (or fault detection in a normal state) is rendered impossible.

That is, the protective relay 5 is set at a detection sensitivity within a certain range selected on the basis of the detection voltage Vm obtained when the system frequency f is equal to the commercial frequency f and the system voltage E is equal to the normal operation voltage Vs.

It is presumed in the following description that a detection value is selected for an overvoltage of 120 to 140% and a low voltage of 80 to 70%.

When the sensitivity is so established as to detect an overvoltage or a low voltage at a frequency below the commercial frequency fs, the disadvantage existed that the detection voltage Vm comes to be smaller than Vs x 40% in case the system frequency is lower than fs x 40%, so that a low-voltage detection is executed even in a normal state while any overvoltage being as high as 120 to 140% of a normal value could not be detected.

From EP-A1-0 105 077, which has to be considered under Art. 54 (3) and (4) EPC, a protective apparatus for a variable voltage and variable frequency electric power system is known, in which the sensitivity of the protective apparatus is changed in response to the frequency of the power system.

It is an object of the present invention to provide a voltage protective apparatus capable of detecting any abnormal voltage in a variable-frequency power system with certainty even when the system is in a low-frequency operation mode, thereby enhancing the functional reliability in protection of the system.

According to the invention, a voltage protective apparatus is provided for a variable-frequency electric power system in which the voltage-to-frequency ratio is maintained at a predetermined constant value under normal conditions, comprising: a voltage detector for producing an output signal corresponding to the interphase or phase voltage of the power system; a frequency detector for producing an output signal corresponding to the frequency of the power system, a divider for computing the voltage-to-frequency ratio from the outputs of said frequency detector and voltage detector; and a voltage discriminator for comparing the output of said divider with a predetermined reference value.

Fig. 1 is a block diagram of a conventional voltage detecting apparatus for a variable-frequency power system;

Fig. 2 is a block diagram of another solution of a voltage detecting apparatus for a variable-frequency power system; and

Figs. 3 is a block diagram of an embodiment of this invention.

Hereinafter an exemplary embodiment of the present invention will be described with reference to the accompanying drawing.

In Fig. 2, a pilot generator 7 is coupled with the shaft of an AC motor 4 and produces an output es, which is proportional to the rotational speed of the motor 4 and is inputted to a protective relay 5 as a threshold set signal. The protective relay 5 is so connected that the detected secondary voltage Vm of an output transformer 3 is inputted thereto, and its threshold value is increased or decreased in proportion to the voltage es which is the threshold set signal. Since other components are equal to those shown previously in Fig. 1, they are represented by the same reference numerals.

In this arrangement where the output voltage es of the pilot generator 7 is altered in proportion to the system frequency f, the threshold value of the protective relay 5 always receiving the voltage es is not kept fixed but is increased or decreased in accordance with each change in the frequency. Therefore, upon occurrence of any fault in the power system, the protective relay 5 compares the input interphase (or phase) voltage with the threshold value proportional to the system frequency f in the abnormal state of the system. In an exemplary case where the relay sensitivity is so established as to detect a 130% (or 75%) voltage when the system frequency f is equal to a commercial frequency fs, if the frequency f at the occurrence of an abnormal voltage is fs × 40%, the threshold value is lowered to 40% so that a detection signal is outputted properly even at the abnormal system voltage.

The above circuit may be so modified that the output of the pilot generator 7 and the secondary voltage of the output transformer 3 fed to the protective relay 5 via the instrument transformer may be fed via input devices (not shown) respectively through signal level conversion.

In case the AC motor 4 is of induction type, the output es of the pilot generator 7 is not exactly proportional to the system frequency f. However, since the slip thereof is merely 5% or so, it is ignorable in practical use.

Although in the above circuit the output of the pilot generator 7 is applied as an input signal to the protective relay 5 for determining the threshold value thereof, a detector may be provided to detect some other physical quantity such as voltage, current or rotational speed proportional to the system frequency f, and the detected physical quantity may be used as the aforesaid input signal to determine the threshold value either directly or through signal level conversion.

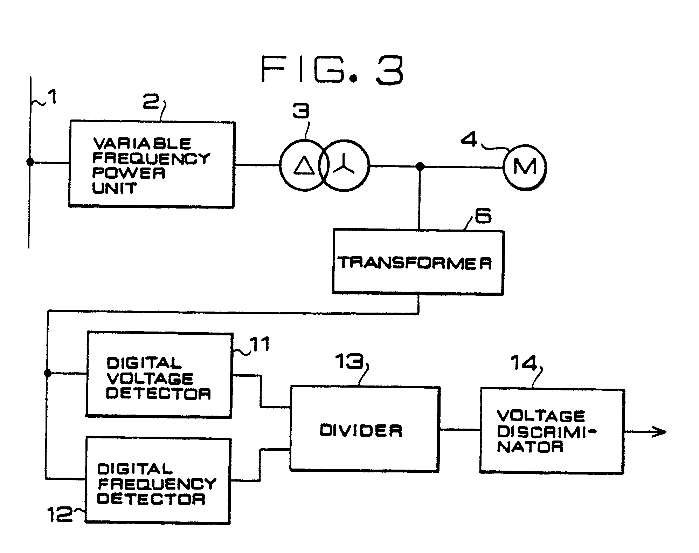

Fig. 3 shows an embodiment of the present invention, wherein the same reference numerals as those used in Figs. 2 denote equal or equivalent components.

In Fig. 3, an interphase (or phase) voltage Vm obtained from an instrument transformer 6 is introduced to both a digital voltage detector 11 and a digital frequency detector 12. There are also shown a divider 13 and a voltage discriminator 14 (e.g. relay or comparator). In this arrangement, the digital voltage detector 11 converts an interphase (or phase) voltage Vm into a digital value Vmd, which is then fed to the divider 13.

$$Vmd = f \cdot Vs/fs \cdot Kod \qquad \ldots\ldots (3)$$

where Kod: constant

The digital frequency detector 12 has a function of converting the interphase (or phase) voltage Vm into a frequency fg at the occurrence of an abnormal voltage in the system, and the digital frequency fd is fed to the divider 13.

$$Fd = f \cdot Kfd \qquad \ldots\ldots (4)$$

where Kfd: constant

3

The divider 13 computes the voltage-to-frequency ratio from the outputs of the two detectors 11 and 12 and sends out the digital value VF shown below.

$$VF = Vmd/Fd$$

$$= (Kod/Kf) \cdot (Vs/fs)$$

$$= KD \cdot Vs \qquad\qquad \dots \dots (5)$$

where $KD = Kod/(Kfd \bullet fs)$

In response to the digital value VF thus received, the voltage discriminator 14 produces a voltage detection signal in case the input digital value VF is higher than a predetermined reference value.

As is manifest also from Eq. (5), the digital value VF is not dependent on the frequency in any abnormal voltage state, so that even when this frequency is low and the interphase (or phase) voltage Vm is small, an input signal of a level corresponding to the normal operation voltage Vs is fed to the voltage discriminator 14 to render the voltage detection always possible. Consequently, with the operation frequency range of the system, the interphase (or phase) voltage is detectable properly at a fixed sensitivity.

Although in the foregoing embodiment the system voltage is applied as an input to the frequency detector, it is also possible to apply the system current or to employ some other means such as a pilot generator connected directly to the AC motor 4.

In addition to the above embodiment where the voltage detector and the frequency detector are of digital type, it is a matter of course that such detectors may be of analog type as well.

Furthermore, the system load is not limited to an AC motor alone, and similar effect is attainable practically in any power system where the voltage-to-frequency ratio can be maintained constant under control.

As mentioned hereinabove, according to the present invention where the output of a physical quantity detector proportional to the system frequency is fed as a threshold set input to a protective relay which functions in response to an interphase (or phase) voltage or a voltage corresponding thereto, the threshold value of the protective relay is reduced with decrease of the system frequency, so that it becomes possible to ensure proper detection of any abnormal-voltage fault during a low-frequency operation mode of the power system, hence enhancing the functional reliability in protection of the system against any overvoltage (or low voltage).

## Claims

1.  A voltage protective apparatus for a variable-frequency electric power system in which the voltage-to-frequency ratio is maintained at a predetermined constant value under normal conditions, comprising: a voltage detector (11) for producing an output signal corresponding to the interphase or phase voltage of the power system; a frequency detector (12) for producing an output signal corresponding to the frequency of the power system, a divider (13) for computing the voltage-to-frequency ratio from the outputs of said frequency detector (12) and voltage detector (11); and a voltage discriminator (14) for comparing the output of said divider (13) with a predetermined reference value.

## Revendications

1.  Dispositif protecteur sensible à la tension pour un système d'alim entation électrique à fréquence variable dans lequel le rapport tension/fréquence est maintenu à une valeur prédéterminée constante dans des conditions normales, ce dispositif comprenant : un détecteur de tension (11) destiné à engendrer un signal de sortie correspondant à la tension de phase ou entre phases du système d'alimentation, un détecteur de fréquence (12) destiné à engendrer un signal de sortie correspondant à la fréquence du système d'alimentation, un diviseur (13) destiné à établir le rapport tension/fréquence à partir des sorties dudit détecteur de fréquence (12) et dudit détecteur de tension (11) ; et un discriminateur de tension (1 4) destiné à comparer la sortie dudit diseur (13) à une valeur de référence

prédéterminée.

## Ansprüche

1. Spannungsschutzeinrichtung für ein Stromversorgungssystem mit variabler Frequenz, bei der das Spannungs-Frequenz-Verhältnis unter normalen Bedingungen auf einem vorbestimmten, konstanten Wert gehalten wird, gekennzeichnet durch einen Spannungsdetektor (11) zur Erzeugung eines Ausgangssignales, welches der Zwischenphasen-oder Phasenspannung des Stromversorgungssystemes entspricht;
einen Frequenzdetektor (12) zur Erzeugung eines Ausgangssignales, welches der Frequenz des Stromversorgungssystems entspricht;
einen Teiler (13) zum Errechnen des Spannungs-Frequenz-Verhältnisses aus den Ausgangssignalen des Frequenzdetektors (12) und des Spannungsdetektors (11);
einen Spannungsdiskriminator (14) zum Vergleichen des Ausgangssignales des Teilers (13) mit einem vorbestimmten Referenzwert.

FIG.1

FIG. 2

EP 0 264 971 B1

# FIG. 3